Europäisches Patentamt

European Patent Office

Office européen des brevets

(11) Publication number: **0 461 738 B1**

# EUROPEAN PATENT SPECIFICATION

(45) Date of publication of patent specification: **18.01.95**

(51) Int. Cl.6: **C04B 24/00**, C04B 28/04,
//(C04B28/04,24:06,24:08,24:12,
24:18,24:26,24:38)

(21) Application number: **91250150.9**

(22) Date of filing: **08.06.91**

(54) **Strength enhancing additive and water repellant mortars containing same.**

(30) Priority: **12.06.90 US 536833**

(43) Date of publication of application:
**18.12.91 Bulletin 91/51**

(45) Publication of the grant of the patent:
**18.01.95 Bulletin 95/03**

(84) Designated Contracting States:
**AT BE CH DE DK ES FR GB GR IT LI LU NL SE**

(56) References cited:
**FR-A- 2 566 419**

**CHEMICAL ABSTRACTS, vol. 111, no. 6, 18th
September 1989, page 303, abstract no.
102010F, Columbus, Ohio, US; & SU-A-1 474
128 (LITAGROPROMSTROI CENTER OF TECH-
NICAL RESEARCH IN CONSTRUCTION)
23-04-1989**

**CHEMICAL ABSTRACTS, vol. 106, no. 20, 18th
May 1987, page 347, abstract no. 161681V,
Columbus, Ohio, US; & SU-A-1 273 343
(STATE SCIENTIFIC RESEARCH INSTITUTE
OF CEMENT INDUSTRY) 30-11-1986**

**CHEMICAL ABSTRACTS, vol. 112, no. 20, ab-
stract no. 184859X, Columbus, Ohio, US;&
CS-A-254 423 (K. SESTAUER et al.)
01-11-1989**

(73) Proprietor: **W.R. Grace & Co.-Conn.
Grace Plaza,
1114 Avenue of the Americas
New York,
New York 10036-7794 (US)**

(72) Inventor: **Chin, David
50 Main Street
Charlestown,
Massachusetts 02129 (US)**

(74) Representative: **UEXKÜLL & STOLBERG Paten-
tanwälte
Beselerstrasse 4
D-22607 Hamburg (DE)**

**Description**

BACKGROUND OF THE INVENTION

The present invention relates to an additive for mortars which provides a mortar having good water repellency, excellent adhesion to difficult substrates, e.g. water repellant masonry blocks and bricks, and superior compressive strength.

It is known in the masonry field that various additives may be added to a mortar, at the time of addition of the mix water, in order to provide the mortar with certain required properties. Necessary properties for a mortar include water repellency after hardening, compressive strength, adhesion to the substrates to be joined, workability and board life. It is particularly desired in the art to provide a mortar which has a balance of all of the above properties. It would also be advantageous if such a mortar could be provided by the addition of a single, low-cost additive when the mortar is mixed.

Various additives have been used to improve the individual properties of mortars. For example, calcium stearate powders have been used to improve the water repellency of mortars. Also, certain latexes have been used to improve the adhesion of mortars to difficult to bond substrates such as water repellant masonry blocks, which due to their hydrophobic nature do not readily absorb water or paste from the mortar, which reduces bond strength. Only a limited number of latexes are effective in improving the bond strength of mortars and these generally do not improve the bond strength of all mortars. These also tend to cause excessive air entrainment in the mortar composition which reduces bond strength. Furthermore, each of these individual additives only improves one property, if any, of the mortar, rather than providing an advantageous balance of properties, and both additives may be deleterious to certain properties of the mortar, e.g. compressive strength and/or flexural strength, workability, etc.

Other additives have been used to improve the strength of mortars. The effect of these additives is unpredictable, i.e. a given additive may provide an improvement in strength with one type of mortar, but not with another type. Also, the compatibility of these additives with other additives such as the above-mentioned calcium stearate powders and latexes is unpredictable, and the net effect of the combined additives may vary substantially, depending upon the individual components chosen and proportions used.

Thus, it has been difficult to insure that any chosen combination of commercially available additives will provide a mortar having all the required properties described above. It has been desired to provide a single additive which when added to most available mortars would consistently produce mortar compositions having an excellent balance of properties.

SUMMARY OF THE INVENTION

The present invention relates to an additive for mortars which provides a mortar having good water repellency, excellent adhesion to difficult substrates, e.g. water repellant masonry blocks and bricks, and superior compressive strength. More particularly, the present invention relates to such an additive which comprises (a) a water repelling agent, (b) a synthetic latex, (c) an alkanolamine, and (d) a set retarding agent.

In preferred embodiments of the invention, the water repelling agent is a stearate salt dispersion, most preferably a dispersion of calcium stearate, the synthetic latex is an acrylic latex, the alkanolamine is selected from the group consisting of triethanolamine, triisopropanolamine, and mixtures thereof, and the set retarding agent may be selected from the group consisting of lignosulfonate salts, hydroxycarboxylic acids, polysaccharides, and mixtures thereof.

In another preferred embodiment of the invention, the additive comprises from about 40 to 75, and more preferably from 50 to 70, weight percent of the water repelling agent, from about 5 to 35, and more preferably from 10 to 30, weight percent of the synthetic latex, from about 0.5 to 15, and more preferably from 1 to 10, weight percent of the alkanolamine or mixture thereof, and from 5 to 25, and more preferably from 10 to 20, weight percent of the set retarding agent, solids on solids, based on the total weight of (a), (b), (c) and (d) solids.

DETAILED DESCRIPTION OF THE INVENTION

The term mortar, as it is used herein, refers to any mixture comprising a hydraulic cement binder and sand. The cement binder may be, e.g., Portland cement or a pozzolanic cement. Such mortars are often mixed with hydrated lime prior to use. The cement may alternatively be interground, at a masonry cement manufacturing plant, with various other additives, e.g. workability agents and water retention agents, and/or finely ground materials, e.g. lime, granulated slag or fly ash.

The additive composition of the present invention comprises a water repelling agent, a synthetic latex, an alkanolamine, and a set retarding agent.

Water repelling agents which are suitable for use in the present invention include rosin acids, fatty acids and salts thereof, e.g. calcium, sodium, ammonium, butyl and other salts of stearate or oleate. Metal stearate salt dispersions are preferred, and calcium stearate is particularly preferred as the water repelling agent. A preferred calcium stearate dispersion is commercially available from W.R. Grace & Co. -Conn. under the tradename DARAPEL®.

The term "synthetic latex" as it is used herein, refers to aqueous suspensions of hydrocarbon polymers which are made by emulsion polymerisation techniques from styrene-butadiene copolymer, acrylate resins, polyvinyl acetate, and similar materials. Acrylic latexes are preferred for use in the present invention, i.e. latexes made by emulsion homopolymerization or copolymerisation of acrylic acid, methacrylic acid, esters of these acids, or acrylonitrile. Other comonomers which may be included in the emulsion polymerised polymer include vinyl acetate and styrene. A particularly preferred acrylic synthetic latex is commercially available from Union Carbide Corp. under the tradename UCAR® 413.

Alkanolamines which are suitable for use in the additive include, mono-, di- and tri- alkanolamines and mixtures thereof. Particularly preferred alkanolamines are trialkanolamines, particularly triethanolamine and triisopropanolamine, and most preferably a blend of these two amines. It has been found by the inventor that the use of a blend of triethanolamine and triisopropanolamine provides an additive which consistently provides superior properties when used in different types of mortars. When this blend of amines is used, it is preferred to use a ratio of triethanolamine to triisopropanolamine of from 5:1 to 1:5, and most preferably about 2:1 to 1:2.

The term set retarding agents, as it is used herein, refers to those additives which are known to retard the setting of mortars and masonry cements. These include, but are by no means limited to, mono- and polysaccharides, lignosulfonate salts, and hydroxylated carboxylic acids. Lignosulfonate salts, polysaccharides, e.g. corn syrup, and mixtures thereof are particularly preferred.

In a preferred embodiment of the invention, the additive may comprise from about 40 to 75, and more preferably from 50 to 70 weight percent of the water repelling agent, from about 5 to 35, and more preferably from 10 to 30 weight percent of the synthetic latex, from about 0.5 to 15, and more preferably from 1 to 10 weight percent of the alkanolamine or mixture thereof, and from 5 to 25, and more preferably from 10 to 20 weight percent of the set retarding agent, based on the total solids weight of these ingredients.

The additive of the invention may be added to a mortar in any desired amount which provides a mortar composition having advantageous properties. However, it is generally preferred to use from about 0.1 to 2.0, and more preferably from 0.25 to 1.0 weight percent of the additive, (solids on solids) based on the weight of the hydraulic cement binder. The additive is generally provided in the form of an aqueous dispersion, with a solids content of about 15 to 65%, and preferably about 30 to 50%. The aqueous carrier is provided at least in part by the water contained by the latex and by any waterproofing agent dispersion which may be used, but it is typically necessary to add additional water to obtain the desired solids level.

The additive of the invention may be manufactured using any conventional mixing method. It is generally preferred to mix all of the components of the additive at once until homogeneous, using relatively low shear.

If desired, a mortar composition according to the invention may also be provided by adding the components of the additive of the invention to the mortar separately. This is generally not preferred, as it may result in a lack of homogeneity in the mortar composition. Such a mortar composition would preferably comprise from 0.10 to 1.25, and preferably from 0.2 to 1.0 weight percent of the water repelling agent (solids on solids), from 0.05 to 0.35, and more preferably from 0.1 to 0.3 weight percent of the synthetic latex, from 0.005 to 0.20, and preferably from 0.005 to 0.10 weight percent of the alkanolamine, and from 0.005 to 0.40, and more preferably from 0.10 to 0.30 weight percent of the set retarding agent, solids on solids, based on the weight of the hydraulic cement binder.

EXAMPLE 1

Two additive compositions were prepared with formulations as shown in Table 1 below. Composition 1 comprised a calcium stearate dispersion (commercially available from W.R. Grace & Co.-Conn. under the tradename DARAPEL®), and an acrylic latex (commercially available from Union Carbide Corp. under the tradename UCAR®413), and was intended to represent an optimized composition according to the prior art. Composition 2 was a composition according to one embodiment of the invention.

## TABLE 1

| Component | Parts by Weight | |
|---|---|---|
| | Composition 1 | Composition 2 |
| Calcium Stearate dispersion | 58.4 | 58.4 |
| Acrylic latex | 18.9 | 18.9 |
| TIPA | - | 3.04 |
| TEA | - | 3.04 |
| Daratard®17 Retarder | - | 16.7 |

These two compositions were added to three different mortars containing different cement binders (Type S Portland cement/lime mortar, Type S masonry cement and Type N masonry cement) at addition levels of 453g (16 oz) and 566g (20 oz), based on 45.4kg (100 lbs.) cement, respectively. Each group of mortar samples containing the additives was then tested against a blank sample of the same mortar for entrained air content, Compressive strength (ASTM C 270-89, determined using 7.6cm x 15.2cm (3"x6") cylinders), and prism flexural bond strength (ASTM C 1072-86, determined using concrete bricks, which is a measure of adhesion to masonry bricks/blocks). The results are as shown in Tables 2-4.

The results shown in the Tables indicate that the composition of the invention provides a consistently better balance of 3 day and 28 day compressive strength and bond strength, as compared to the blank and the additive of the prior art.

EXAMPLE 2

Using three different mortars (Type S Masonry Cement Mortar, and two batches of Type S Portland Cement/Lime Mortar, one (#1) containing a Type I/II Portland Cement, and the other (#2) containing a different Type I/II Portland Cement as the Portland Cement component), were prepared samples containing four additives, as shown in the left columns of Tables 5-7. Sample 1, the blank, contained no additives, sample 2 contained only a set retarding agent (DARATARD®17 set retarding agent), sample 3 contained only a 1:1 blend of TIPA and TEA, sample 4 contained an additive according to the invention, and sample 5 contained the additive of the prior art (calcium stearate dispersion and latex).

These mortar samples were tested for entrained air content, compressive strength, and prism flexural bond strength. The results of this testing are shown in Tables 5-7.

The data of Tables 5-7 demonstrates that while each of the components of the invention improves some of the properties of one or more of the mortars, the improvement varies unpredictably between different mortar compositions. The additive of the invention, however, provides a consistently superior balance of properties, regardless of the mortar composition used.

The foregoing description and examples are intended to be illustrative in nature. Other variations and modifications could be practiced by one skilled in the art without departing from the spirit and scope of the invention.

## TABLE 2

### TYPE S PORTLAND CEMENT/LIME MORTAR

| Sample # | Entrained Air (%) | Compressive Strength MPa (psi) 3 day | Compressive Strength MPa (psi) 28 day | Flexural Bond Strength MPa (psi) 3 day |
|---|---|---|---|---|
| Blank | 15.0 | 7.87 (1165) | 14.93 (2210) | 1.10 (163) |
| 1 | 13.8 | 10.01 (1481) | 15.77 (2334) | 1.41 (208) |
| 2 | 13.0 | 13.03 (1928) | 20.51 (3035) | 1.57 (186) |
| 3 | 16.0 | 12.30 (1810) | 19.46 (2880) | 1.29 (191) |

EP 0 461 738 B1

EP 0 461 738 B1

## TABLE 3

### TYPE S MASONRY CEMENT MORTAR

| Sample # | Entrained Air (%) | Compressive Strength MPa (psi) | | Flexural Bond Strength MPa (psi) |
|----------|-------------------|-------------|-------------|-------------|
| | | 3 day | 28 day | 3 day |
| Blank | 19.0 | 10.01 (1482) | 17.22 (2549) | 1.05 (155) |
| 1 | 15.5 | 11.83 (1751) | 22.60 (3344) | 1.34 (198) |
| 2 | 16.0 | 11.76 (1741) | 21.34 (3159) | 1.32 (196) |
| 3 | 13.8 | 14.17 (2097) | 24.38 (3609) | 1.44 (213) |

## TABLE 4

### TYPE N MASONRY CEMENT MORTAR

| Sample # | Entrained Air (%) | Compressive Strength MPa (psi) | | Flexural Bond Strength MPa (psi) |
|---|---|---|---|---|
| | | 3 day | 28 day | 3 day |
| Blank | 19.0 | 3.76 (557) | 6.52 (965) | 0.67 (99) |
| 1 | 18.0 | 3.59 (531) | 6.63 (982) | 0.80 (118) |
| 2 | 19.0 | 4.58 (678) | 8.42 (1247) | 0.80 (118) |
| 3 | 18.0 | 5.41 (801) | 10.05 (1488) | 0.89 (131) |

EP 0 461 738 B1

## TABLE 5
### TYPE S PORTLAND CEMENT/LIME MORTAR #1

| Sample # | Additive | Addition Level g/Kg (oz/cwt) | Entrained Air (%) | Compressive Strength MPa (psi) 7 day | 28 day | Flexural Bond Strength MPa (psi) 7 day | 28 day |
|---|---|---|---|---|---|---|---|
| 1 | Blank | 0 (0) | 7.8 | 10.45 (1547) | 17.39 (2573) | 1.01 (150) | 0.93 (138) |
| 2 | Retarder | 1.67 (3) | 8.9 | 12.09 (1789) | 18.35 (2716) | 1.10 (163) | 1.28 (190) |
| 3 | TIPA/TEA | 0.04% * | 9.8 | 12.29 (1819) | 17.63 (2609) | 1.03 (152) | 0.95 (141) |
| 4 | Additive of invention | 11.16 20** | 8.7 | 17.78 (2631) | 25.62 (3792) | 1.20 (177) | 1.33 (197) |
| 5 | Latex/Calcium Stearate | 2.23/6.70(4/12) | 8.3 | 10.07 (1490) | 17.4 (2576) | 0.98 (145) | 0.82 (122) |

*0.02% each, based solids on solids

**Comprises 12 oz of the calcium stearate dispersion and 4 oz of the latex of sample 5, 3 oz of the set retarding agent of sample 2, and 0.02% each TIPA and TEA.

EP 0 461 738 B1

## TABLE 6
### TYPE S PORTLAND CEMENT/LIME MORTAR #2

| Sample # | Additive | Addition Level (oz/cwt) | Entrained Air (%) | Compressive Strength MPa (psi) 7 day | Compressive Strength MPa (psi) 28 day | Flexural Bond Strength MPa (psi) 7 day | Flexural Bond Strength MPa (psi) 28 day |
|---|---|---|---|---|---|---|---|
| 1 | Blank | (0) | 9.6 | 11.84 (1753) | 18.91 (2799) | 0.96 (142) | 0.93 (138) |
| 2 | Retarder | 1.67 (3) | 7.6 | 15.67 (2319) | 23.36 (3458) | 1.01 (149) | 1.49 (220) |
| 3 | TIPA/TEA | 0.04%* | 10.2 | 14.00 (2069) | 20.70 (3063) | 1.07 (158) | 1.18 (175) |
| 4 | Additive of invention | 11.16 (20**) | 8.0 | 17.73 (2624) | 26.99 (3994) | 1.10 (163) | 1.69 (250) |
| 5 | Latex/Calcium Stearate | 2.23/6.7 (4/12) | 9.5 | 12.34 (1827) | 22.33 (3305) | 0.99 (147) | 1.34 (199) |

*0.02% each, based solids on solids

**Comprises 12 oz of the calcium stearate dispersion and 4 oz of the latex of sample 5, 3 oz of the set retarding agent of sample 2, and 0.02% each TIPA and TEA.

## TABLE 7

### TYPE S MASONRY CEMENT MORTAR

| Sample # | Additive | Addition Level oz/cwt | Entrained Air (%) | Compressive Strength (psi) 7 day | Compressive Strength (psi) 28 day | Flexural Bond Strength (psi) 7 day | Flexural Bond Strength (psi) 28 day |
|---|---|---|---|---|---|---|---|
| 1 | Blank | (0) | 15.8 | 10.83 (1603) | 17.39 (2573) | 1.07 (158) | 1.32 (196) |
| 2 | Retarder | 1.67 (3) | 18.5 | 10.83 (1603) | 16.40 (2426) | 1.00 (148) | 0.86 (128) |
| 3 | TIPA/TEA | 0.04%* | 13.2 | 17.71 (2621) | 27.45 (4062) | 0.99 (147) | 1.39 (205) |
| 4 | Additive of invention | 11.16(20**) | 12.5 | 17.19 (2544) | 27.29 (4039) | 1.38 (204) | 1.38 (204) |
| 5 | Latex/Calcium Stearate | 2.23/6.7 (4/12) | 13.5 | 11.93 (1766) | 18.77 (2778) | 1.04 (154) | 0.89 (132) |

*0.02% each, based solids on solids

**Comprises 12 oz of the calcium stearate dispersion and 4 oz of the latex of sample 5, 3 oz of the set retarding agent of sample 2, and 0.02% each TIPA and TEA.

Claims

1. An additive for masonry cement compositions comprising:
   a) a water repelling agent;

b) a synthetic latex;
c) an alkanolamine; and
d) a set retarding agent.

2. The additive of claim 1 wherein the water repelling agent is a fatty acid or salt thereof.

3. The additive of claim 1 wherein the water repelling agent is a stearate salt dispersion.

4. The additive of claim 1 wherein the alkanolamine is selected from the group consisting of mono-, di- and tri- alkanolamines and mixtures thereof.

5. The additive of claim 1 wherein the synthetic latex is an acrylic latex.

6. The additive of claim 1 wherein the set retarding agent is selected from the group consisting of: lignosulfonate salts, polysaccharides, hydroxy carboxylic acids, and mixtures thereof.

7. The additive of claim 6 wherein the set retarding agent is a mixture of calcium lignosulfonate and corn syrup.

8. Additive according to any of claims 1 to 7 comprising from 40 to 75 and preferably 50 to 70 weight percent of the water repelling agent, from 5 to 35 and preferably 10 to 30 weight percent of the synthetic latex, from 0.5 to 15 and preferably 1 to 10 percent of the alkanolamine, and from 5 to 25 and preferably 10 to 20 weight percent of the set retarding agent based on the total weight of the composition.

9. The additive of claim 4 wherein the alkanolamine is a selected from the group consisting of triethanolamine, triisopropanolamine and mixtures thereof.

10. The additive of claim 4 wherein the alkanolamine is a mixture of triethanolamine and triisopropanolamine and wherein the weight ratio of triisopropanolamine to triethanolamine is from 5:1 to 1:5.

11. A hydraulic cement composition comprising an additive according to any of claims 1 to 10 and a hydraulic cement binder.

12. The hydraulic cement composition of claim 11 wherein the hydraulic cement binder comprises Portland cement.

13. The hydraulic cement composition of claim 11 or 12 comprising from 0.10 to 1.25 and preferably 0.20 to 1.0 weight percent of the water repelling agent, from 0.05 to 0.35 and preferably 0.1 to 0.3 weight percent of the synthetic latex, from 0.005 to 0.20 and preferably 0.005 to 0.10 percent of the alkanolamine, and from 0.005 to 0.40 and preferably 0.10 to 0.30 weight percent of the set retarding agent based on the total weight of the hydraulic cement binder.

14. The hydraulic cement composition of any of claims 11 to 13 wherein the water repelling agent is a calcium stearate dispersion.

**Patentansprüche**

1. Additiv für Bauzementzusammensetzungen, das:
        (a) wasserabweisendes Mittel,
        (b) synthetischen Latex,
        (c) Alkanolamin und
        (d) abbindungverzögerndes Mittel
    umfaßt.

2. Additiv nach Anspruch 1, bei dem das wasserabweisende Mittel eine Fettsäure oder ein Salz derselben ist.

EP 0 461 738 B1

3. Additiv nach Anspruch 1, bei dem das wasserabweisende Mittel eine Stearatsalz-Dispersion ist.

4. Additiv nach Anspruch 1, bei dem das Alkanolamin ausgewählt ist aus der Gruppe bestehend aus Mono-, Di- und Trialkanolaminen und Mischungen derselben.

5. Additiv nach Anspruch 1, bei dem der synthetische Latex ein acrylischer Latex ist.

6. Additiv nach Anspruch 1, bei dem das abbindungverzögernde Mittel ausgewählt ist aus der Gruppe bestehend aus Lignosulfonatsalzen, Polysacchariden, Hydroxycarbonsäuren und Mischungen derselben.

7. Additiv nach Anspruch 6, bei dem das abbindungverzögernde Mittel eine Mischung aus Calciumlignosulfonat und Maissirup ist.

8. Additiv nach einem der Ansprüche 1 bis 7, das 40 bis 75 und vorzugsweise 50 bis 70 Gew.-% des wasserabweisenden Mittels, 5 bis 35 und vorzugsweise 10 bis 30 Gew.-% des synthetischen Latex, 0,5 bis 15 und vorzugsweise 1 bis 10 Gew.-% des Alkanolamins und 5 bis 25 und vorzugsweise 10 bis 20 Gew.-% des abbindungverzögernden Mittels, bezogen auf das Gesamtgewicht der Zusammensetzung, umfaßt.

9. Additiv nach Anspruch 4, bei dem das Alkanolamin ausgewählt ist aus der Gruppe bestehend aus Triethanolamin, Triisopropanolamin und Mischungen derselben.

10. Additiv nach Anspruch 4, bei dem das Alkanolamin eine Mischung von Triethanolamin und Triisopropanolamin ist, wobei das Gewichtsverhältnis von Triisopropanolamin und Triethanolamin 5 : 1 bis 1 : 5 beträgt.

11. Hydraulische Zementzusammensetzung, die ein Additiv gemäß einem der Ansprüche 1 bis 10 und ein hydraulisches Zementbindemittel umfaßt.

12. Hydraulische Zementzusammensetzung nach Anspruch 11, bei der das hydraulische Zementbindemittel Portlandzement umfaßt.

13. Hydraulische Zementzusammensetzung nach Anspruch 11 oder 12, die 0,10 bis 1,25 und vorzugsweise 0,20 bis 1,0 Gew.-% des wasserabweisenden Mittels, 0,05 bis 0,35 und vorzugsweise 0,1 bis 0,3 Gew.-% des synthetischen Latex, 0,005 bis 0,20 und vorzugsweise 0,005 bis 0,10 Gew.-% des Alkanolamins und 0,005 bis 0,40 und vorzugsweise 0,10 bis 0,30 Gew.-% des abbindungverzögernden Mittels, bezogen auf das Gesamtgewicht des hydraulischen Zementbindemittels, umfaßt.

14. hydraulische Zementzusammensetzung nach einem der Ansprüche 11 bis 13, bei der das wasserabweisende Mittel eine Calciumstearat-Dispersion ist.

**Revendications**

1. Additif pour des compositions de ciment de maçonnerie comprenant :
   a) un agent hydrofuge;
   b) un latex synthétique;
   c) un alcanolamine; et
   d) un agent retardant la prise.

2. Additif de la revendication 1 où l'agent hydrofuge est un acide gras ou son sel.

3. Additif de la revendication 1 où l'agent hydrofuge est une dispersion d'un sel de stéarate.

4. Additif de la revendication 1 où l'alcanolamine est choisie dans le groupe consistant en mono-, di- et trialcanolamines et leurs mélanges.

5. Additif de la revendication 1 où le latex synthétique est un latex acrylique.

12

**6.** Additif de la revendication 1 où l'agent retardant la prise est choisi dans le groupe consistant en sels de lignosulfonate, polysaccharides, acides hydroxy carboxylique's, et leurs mélanges.

**7.** Additif de la revendication 6 où l'agent retardant la prise est un mélange de lignosulfonate de calcium et de sirop de maïs.

**8.** Additif selon l'une quelconque des revendications 1 à 7 comprenant 40 à 75, et de préférence, 50 à 70 pour cent en poids de l'agent hydrofuge, 5 à 35 et, de préférence, 10 à 30 pour cent en poids du latex synthétique, 0,5 à 15 et, de préférence, 1 à 10 pour cent de l'alcanolamine, et 5 à 25 et, de préférence, 10 à 20 pour cent en poids de l'agent retardant la prise, en se basant sur le poids total de la composition.

**9.** Additif de la revendication 4 où l'alcanolamine est choisie dans le groupe consistant en triéthanolamine, triisopropanolamine et leurs mélanges.

**10.** Additif de la revendication 4 où l'alcanolamine est un mélange de triéthanolamine et de triisopropanolamine et où le rapport pondéral de la triisopropanolamine à la triéthanolamine est de 5:1 à 1:5.

**11.** Composition de ciment hydraulique comprenant un additif selon l'une quelconque des revendications 1 à 10 et un liant de ciment hydraulique.

**12.** Composition de ciment hydraulique de la revendication 11 où le liant de ciment hydraulique se compose de ciment Portland.

**13.** Composition de ciment hydraulique de la revendication 11 ou 12 comprenant 0,10 à 1,25 et, de préférence, 0,20 à 1,0 pour cent en poids de l'agent hydrofuge, 0,05 à 0,35 et, de préférence, 0,1 à 0,3 pour cent en poids du latex synthétique, 0,005 à 0,20 et, de préférence, 0,005 à 0,10 pour cent de l'alcanolamine, et 0,005 à 0,40 et, de préférence, 0,10 à 0,30 pour cent en poids de l'agent retardant la prise, en se basant sur le poids total du liant de ciment hydraulique.

**14.** Composition de ciment hydraulique selon l'une quelconque des revendications 11 à 13 où l'agent hydrofuge est une dispersion de stéarate de calcium.